# EUROPÄISCHE PATENTSCHRIFT

(11) **EP 1 180 491 B1**
(45) Veröffentlichungstag und Bekanntmachung des Hinweises auf die Patenterteilung: **31.03.2004**
(21) Anmeldenummer: 01119475.0
(22) Anmeldetag: 14.08.2001
(51) Int. Cl.: B66F 9/07, B65G 1/04

(54) **Regalbediengerät**
Stacker crane
Transstockeur

(30) Priorität: 16.08.2000 DE 10040626
(43) Veröffentlichungstag der Anmeldung: 20.02.2002
(73) Patentinhaber: Dambach Lagersysteme GmbH, 76571 Gaggenau (DE); Van Looy Group N.V., 2018 Antwerpen (BE)
(72) Erfinder: Hilaire Benaets, B-8730 Oedelem (BE)
(74) Vertreter: Lasch, Hartmut Dipl.-Ing.

(56) Entgegenhaltungen:
- CH-A- 680 211
- DE-A- 4 400 829

## Beschreibung

Die Erfindung betrifft ein Regalbediengerät für ein Regallager, das eine Vielzahl von Regalfächern aufweist, die von einem Regalgang aus zugänglich sind und jeweils mehrere hintereinander liegende Regallagerplätze aufweisen, mit einer Plattform, die eine Beschickungsvorrichtung zum Einlagern von Objekten in Regallagerplätze bzw. zum Auslagern aus diesen und mehrere Speicherplätze zur Aufnahme von jeweils einem ein- bzw. auszulagernden Objekt aufweist, wobei ein Umsetzförderer vorgesehen ist, mittels dessen das Objekt zwischen verschiedenen Speicherplätzen umsetzbar ist.

Ein derartiger Regalbediengerät ist aus der DE-A-4400829 bekannt.

Ein Regallager umfaßt mehrere ein- oder üblicherweise mehrstöckig ausgebildete Regale, die unter Bildung von Regalgängen auf Abstand angeordnet sind und eine Vielzahl von Regalfächern aufweisen, in denen Gegenstände oder Objekte abgelegt werden können, bei denen es sich beispielsweise um Rollen, Behälter, Kartons, Paletten etc. handeln kann. Ein Regalbediengerät dient zum Ein- und Auslagern der Objekte in dem Regallager und kann entlang dem Regalgang verfahren werden. Das Regalbediengerät trägt einen vertikalen Mast, an dem eine höhenverfahrbare Plattform gehalten ist, auf der eine Beschickungsvorrichtung beispielsweise in Form eines Gabelteleskops oder eines Drehschubtisches angeordnet ist, mit der ein Objekt aus einem Regalfach entnommen und auf die Plattform übernommen werden kann. Entsprechend kann ein Objekt mittels der Beschickungsvorrichtung auch von der Plattform in ein Regalfach eingelagert werden. Durch Verfahren des Regalbediengerätes entlang dem Regalgang und durch Verfahren der Plattform an dem vertikalen Mast kann jedes Regalfach angefahren werden.

Da bei früheren Ausgestaltungen von Regalbediengeräten pro Regalfahrt immer nur ein Objekt aufgenommen werden konnte, sind zur Erhöhung der Umschlagleistung Regalbediengeräte entwickelt worden, die auf der Plattform mehrere Speicherplätze zur Aufnahme von Objekten besitzen. Aus der US 4 566 838 ist ein Regalbediengerät bekannt, bei dem auf der höhenverfahrbaren Plattform ein in Längsrichtung des Regalgangs verlaufender Horizontalförderer angeordnet ist, der als Speichervorrichtung für einzulagernde bzw. auszulagernde Objekte dient und mehrere Objekte aufnehmen kann und somit mehrere Speicherplätze besitzt. Durch Aktivierung bzw. Verfahren des Horizontalförderers können die Objekte zwischen einzelnen Speicherplätzen verschoben werden. Am Kopfende des Horizontalförderers ist die Beschickungsvorrichtung angeordnet, mit der Objekte von dem Horizontalförderer übernommen und in einen Regallagerplatz eingelagert bzw. aus diesem ausgelagert und an den Horizontalförderer übergeben werden können.

In Weiterbildung der vorgenannten Ausgestaltung ist in der DE 42 05 001 C2 ein Regalbediengerät gezeigt, wobei zur Erhöhung der Umschlagleistung auf der Plattform zur Bildung von Speicherplätzen mehrere in Längsrichtung des Regalgangs verlaufende Horizontalförderer übereinander angeordnet sind und die Beschickungsvorrichtung zwischen den einzelnen Horizontalförderern vertikal verfahrbar ist.

Zur Erhöhung der Kapazität eines Regallagers ist es bekannt und mittlerweile üblich, die Regalfächer zwei- oder dreifach tief zu belegen, d.h. quer zur Längsrichtung des Regalgangs bzw. in Richtung des Ein- und Auslagervorganges mehrere Objekte hintereinander in den Regalfächern anzuordnen. Während man bei einem derartigen Regallager auf das Objekt auf dem jeweils ersten, dem Regalgang zugewandten Regallagerplatz eines Regalfaches auch mit herkömmlichen Regalbediengeräten in einfacher Weise zugreifen kann, ist der gezielte Zugriff auf Objekte auf einem inneren Regallagerplatz schwierig oder gar nicht möglich.

Der Erfindung liegt die Aufgabe zugrunde, ein Regalbediengerät der genannten Art zu schaffen, mit dem der gezielte Zugriff auf einzelne Regallagerplätze eines mehrfach tiefbelegten Regalfachs in einfacher und schneller Weise möglich ist.

Diese Aufgabe wird bei einem erfindungsgemäßen Regalbediengerät dadurch gelöst, daß die Speicherplätze auf der Plattform quer zur Längsrichtung des Regalgangs nebeneinander angeordnet sind und daß jedem Speicherplatz eine Hubvorrichtung zugeordnet ist, mittels der ein auf einem der Speicherplätze angeordnetes Objekt relativ zu den Objekten auf den anderen Speicherplätzen höhenverfahrbar ist.

Zur Entnahme eines bestimmten Objektes werden mittels der Beschickungsvorrichtung sämtliche hintereinander liegenden Objekte eines Regalfachs, d.h. bei einem dreifach tief belegten Regalfach alle drei Objekte aus dem Regalfach auf die entsprechend nebeneinander liegenden Speicherplätze der Plattform übernommen. Die Anzahl der Speicherplätze auf der Plattform entspricht der Anzahl der Tiefenbelegung des Regalfachs. Das gewünschte, auszulagernde Objekt kann dann durch Anheben mit der zugeordneten Hubvorrichtung zunächst zwischengelagert werden, während die beiden verbleibenden Objekte mittels der Beschickungsvorrichtung in das Regalfach zurückgeschoben werden. Dabei kann eventuell vorher eine gegenseitige Verschiebung der verbleibenden Objekte stattfinden, was insbesondere dann durchgeführt wird, wenn von drei hintereinanderliegenden Objekten das mittlere herausgenommen wurde. Das auszulagernde Objekt kann entweder in der angehobenen Stellung auf seiner Hubvorrichtung verbleiben, es ist jedoch auch möglich, das Objekt zunächst auf eine andere Hubvorrichtung eines anderen Speicherplatzes umzusetzen, bevor das Regalbediengerät auf ein weiteres auszulagerndes Objekt in einem anderen Regalfach zugreift.

Das erfindungsgemäße Regalbediengerät findet insbesondere bei einem Regallager mit dreifach tief belegten Regalfächern Verwendung, so daß in bevorzugter Ausgestaltung drei Speicherplätze nebeneinander auf der Plattform angeordnet sind.

In Weiterbildung der Erfindung ist vorgesehen, daß die Hubvorrichtungen der Speicherplätze jeweils zwischen einer im wesentlichen in oder unterhalb der Ebene der Beschickungsvorrichtung und des Umsetzförderers liegenden unteren Position und einer angehobenen Position verfahrbar sind. Während des eigentlichen Ein- und Auslagervorganges werden die Objekte allein von der Beschickungsvorrichtung getragen, bei denen es sich vorzugsweise um mehrere in Längsrichtung des Regalganges hintereinander auf Abstand angeordnete, quer ausfahrbare Teleskopgabeln handeln kann. Wenn ein Objekt von der Beschickungsvorrichtung abgenommen werden soll, wird die Hubvorrichtung des entsprechenden Speicherplatzes angehoben, wodurch sie von unten mit dem Objekt in Anlage kommen und dieses von der Beschickungsvorrichtung abheben. Die Anhebung des Objektes über die Höhenverfahrbarkeit der entsprechenden Hubvorrichtung erfolgt um ein so großes Maß, daß die anderen Objekte bei Betätigung der Beschickungsvorrichtung unter dem angehobenen Objekt hindurch verschoben und wieder in das Regalfach eingebracht werden können.

Der Umsetzförderer, mittels dessen die Relativposition zweier Objekte auf der Plattform quer zur Längsrichtung des Regalganges, d.h. in Ein- und Auslagerrichtung, verändert werden kann, umfaßt vorzugsweise zwei in Längsrichtung des Regalganges auf Abstand angeordnete horizontale Fördereinrichtungen, die vorzugsweise jeweils zwei quer zur Längsrichtung des Regalganges verlaufende Horizontalförderer aufweisen, die sich jeweils nur über einen Teil der Breite der nebeneinanderliegenden Speicherplätze erstrecken und sich im Bereich des mittleren Speicherplatzes überlappen. Die Horizontalförderer jeder Fördereinrichtung sind unabhängig voneinander antreibbar, jedoch mit dem entsprechenden Horizontalförderer der anderen Fördereinrichtung synchronisiert, so daß wahlweise ein Objekt bei Aktivierung der beiden rechten Horizontalförderer der Fördereinrichtungen zwischen dem rechten äußeren Speicherplatz und dem mittleren Speicherplatz und bei Aktivierung der beiden linken Horizontalförderer der Fördereinrichtungen zwischen dem linken äußeren Speicherplatz und dem mittleren Speicherplatz umgesetzt werden kann. Bei gleichzeitiger Aktivierung aller Horizontalförderer kann das Objekt auch zwischen dem rechten und dem linken äußeren Speicherplatz umgesetzt werden.

Die zwischen den Speicherplätzen umzusetzenden Objekte ruhen in der normalen Stellung auf der Beschickungsvorrichtung. Um den Umsetzförderer wirksam werden zu lassen, können die unterhalb der Auflageebene der Beschickungsvorrichtung angeordneten Horizontalförderer einzeln oder als Einheit angehoben werden, wodurch sie die umzulagernden Objekte übernehmen, die dabei von der Beschickungsvorrichtung freikommen. Nachdem durch Aktivierung der gewünschten Horizontalförderer das oder die Objekte zwischen Speicherplätzen umgelagert wurden, werden die Fördereinrichtungen des Umsetzförderers wieder abgesenkt, wodurch die Objekte auf der Beschickungsvorrichtung in neuer gegenseitiger Ausrichtung abgelegt werden und von dieser in das Regalfach eingeschoben werden können.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: eine perspektivische Ansicht einer Hubbühne eines erfindungsgemäßen Regalbediengerätes und
- Fig. 2.1 bis 2.25: die einzelnen Phasen eines möglichen Auslagerungsvorganges.

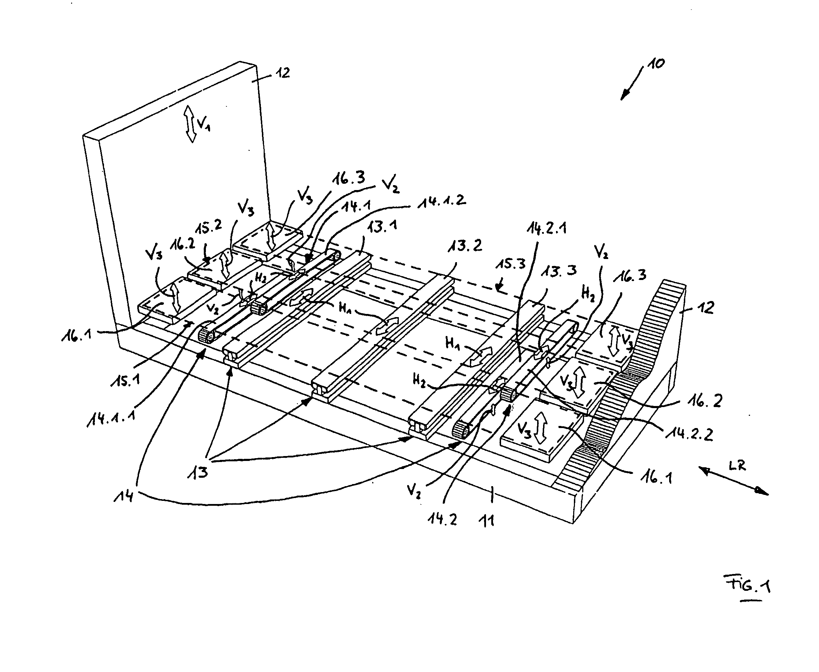

In Fig. 1 ist eine Hubbühne 10 eines nicht weiter dargestellten Regalbediengerätes gezeigt, die zusammen mit dem Regalbediengerät in Längsrichtung (siehe Pfeil LR) des Regalganges in bekannter Weise verfahrbar ist und in ihrer Gesamtheit entlang einem nicht dargestellten vertikalen Mast angehoben und abgesenkt werden kann (siehe Pfeil V₁). Die Hubbühne 10 umfaßt einen unteren horizontalen Rahmen 11, der eine Plattform bildet und an seinen in Längsrichtung LR des Regalganges weisenden Stirnseiten nach oben hervorstehende Wände 12 aufweist, die in ihrem Inneren verschiedene Führungs- und Antriebselemente für die Bewegung der Hubbühne entlang dem Mast aufnehmen und ein Herunterfallen von auf der Hubbühne befindlichen Objekten verhindern. Die gemäß Fig. 1 rechte Wand 12 ist aus Gründen der Übersichtlichkeit nur gebrochen dargestellt.

Auf der Hubbühne 10 sind im mittleren Bereich des Rahmens 11 drei in Längsrichtung LR des Regalganges hintereinander auf Abstand angeordnete, quer zur Längsrichtung LR des Regalganges ausfahrbare Teleskopgabeln 13.1,13.2 und 13.3 vorgesehen, die gemeinsam eine Beschickungsvorrichtung 13 bilden und zu beiden Seiten der Hubbühne 10 in synchronisierter Weise ausfahrbar und einziehbar sind, wie durch die Doppelpfeile H₁ angedeutet ist. Mit Hilfe der Beschickungsvorrichtung 13 können Objekte aus einem Regalfach eines Regallagers auf den Hubtisch 10 übernommen und von diesem in das Regalfach eingebracht werden.

Der Hubtisch 10 und die Beschickungsvorrichtung 13 sind so ausgelegt, daß drei quer zur Längsrichtung LR nebeneinander liegende Objekte aufgenommen werden können, d.h. es sind drei Speicherplätze 15.1,15.2 und 15.3 gebildet, die in Fig. 1 gestrichelt angedeutet sind. Jedem der Speicherplätze 15.1,15,2 und 15.3 ist eine Hubvorrichtung 16.1,16.2 bzw. 16.3 zugeordnet, die jeweils nahe den Stirnseiten der Hubbühne 10 angeordneten Lastaufnahmen besitzt. Die beiden endseitigen Lastaufnahmen jeder Hubvorrichtung 16.1 bzw. 16.2 bzw. 16.3 sind in synchronisierter Weise aus ihrer Grundstellung, in der ihre lastaufnehmende Oberfläche unterhalb der lastaufnehmenden Oberfläche der Beschickungsvorrichtung 13 liegt, in vertikaler Richtung angehoben werden, wie durch die Doppelpfeile V₃ angedeutet ist. Die Hubvorrichtung jedes einzelnen Speicherplatzes ist dabei unabhängig von den Lastaufnahmen der anderen Speicherplätze höhenverfahrbar.

Auf dem Rahmen 11 der Hubbühne 10 sind desweiteren zwei in Längsrichtung LR des Regalganges auf Abstand angeordnete horizontale Fördereinrichtungen 14.1 und 14.2 vorgesehen, die einen Umsetzförderer 14 bilden, mittels dessen ein Objekt zwischen den einzelnen Speicherplätzen 15.1,15.2 und 15.3 quer zur Längsrichtung LR umsetzbar ist. Jede Fördereinrichtung 14.1 und 14.2 umfaßt zwei im vorliegenden Beispiel als Förderbänder ausgebildete Horizontalförderer 14.1.1 und 14.1.2 bzw. 14.2.1 und 14.2.2, die parallel zueinander sowie parallel zu den Teleskopgabeln 13.1,13.2 und 13.3 der Beschickungsvorrichtung 13 verlaufen. Die beiden Horizontalförderer jeder Fördereinrichtung 14.1 und 14.2 sind jeweils unabhängig voneinander in entgegengesetzte Richtungen antreibbar, wie durch die Doppelpfeile H₂ angedeutet ist. Die Antriebsbewegung des Horizontalförderers 14.1.1 der Fördereinrichtung 14.1 ist mit der Antriebsbewegung des auf der gleichen Regalseite der Hubbühne 10 angeordneten Horizontalförderers 14.2.1 der Fördereinrichtung 14.2 synchronisiert. Entsprechend sind auch die Antriebsbewegungen der anderen Horizontalförderer 14.1.2 und 14.2.2 synchronisiert. Die beiden Fördereinrichtungen 14.1 und 14.2 können darüber hinaus als Einheit aus einer unteren Position, in der ihre obere, lastaufnehmende Oberfläche unterhalb der lastaufnehmenden Oberfläche der Teleskopgabeln 13.1,13.2 und 13.3 liegt, derart angehoben werden, daß ihre lastaufnehmende Oberfläche oberhalb der lastaufnehmenden Oberfläche der Teleskopgabeln 13.1,13.2 und 13.3 liegt, wie durch die Doppelpfeile V₂ angedeutet ist. Beim Anheben der Fördereinrichtungen 14.1 und 14.2 können längliche Objekte, die auf den Teleskopgabeln 13.1,13.2 und 13.3 liegen, von diesen übernommen und abgehoben werden.

Die beiden Horizontalförderer 14.1.1 und 14.1.2 der Fördereinrichtung 14.1 sind quer zur Längsrichtung LR des Regalganges derart versetzt zueinander angeordnet, daß sich jeder Horizontalförderer nur über einen Teil der Breite der Hubbühne 10 erstreckt, wobei sich die beiden Horizontalförderer im Bereich des mittleren Speicherplatzes 15.2 überlappen. Eine entsprechende Anordnung ist auch bei den Horizontalförderern 14.2.1 und 14.2.2 der anderen Fördereinrichtung 14.2 vorgesehen.

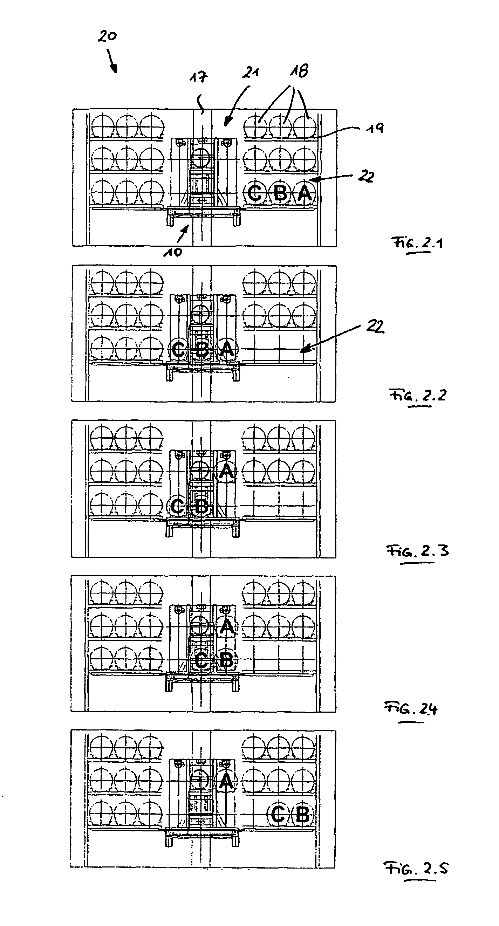

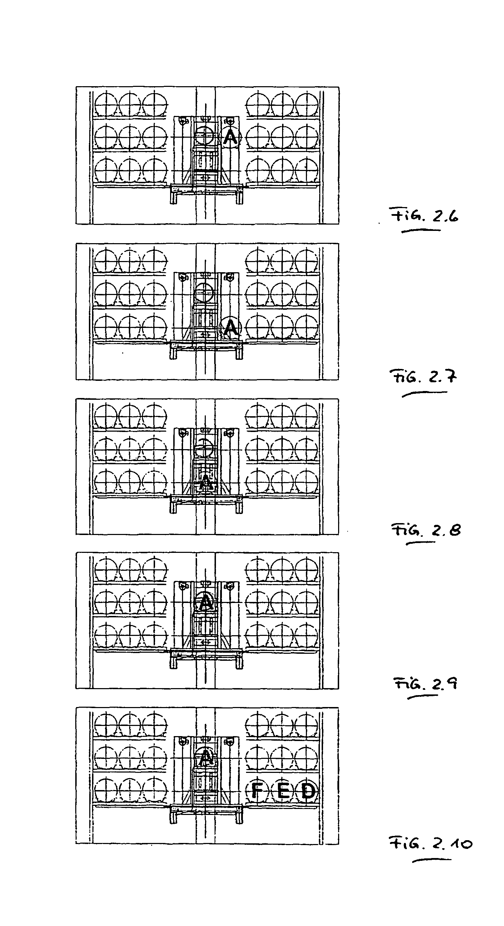

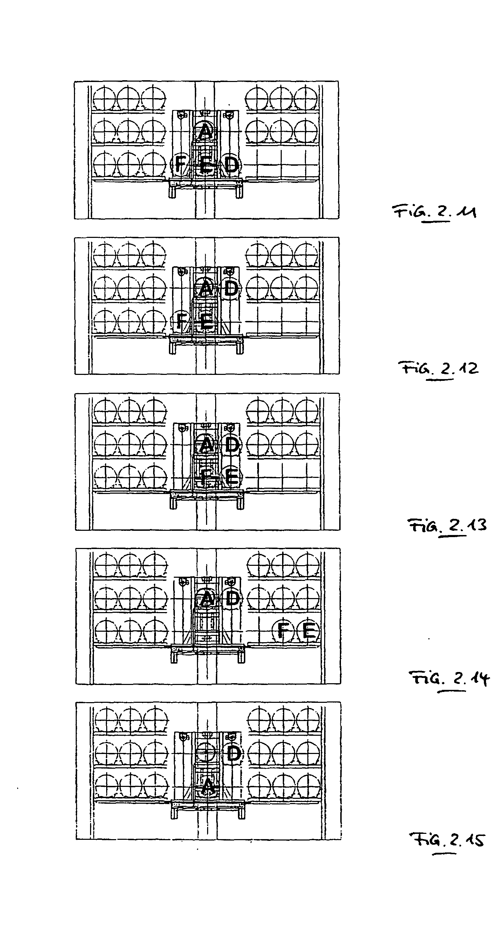

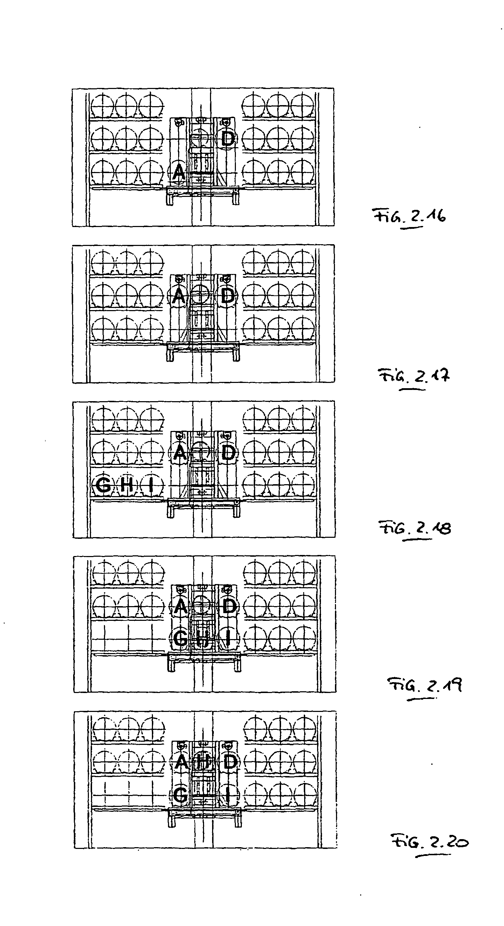

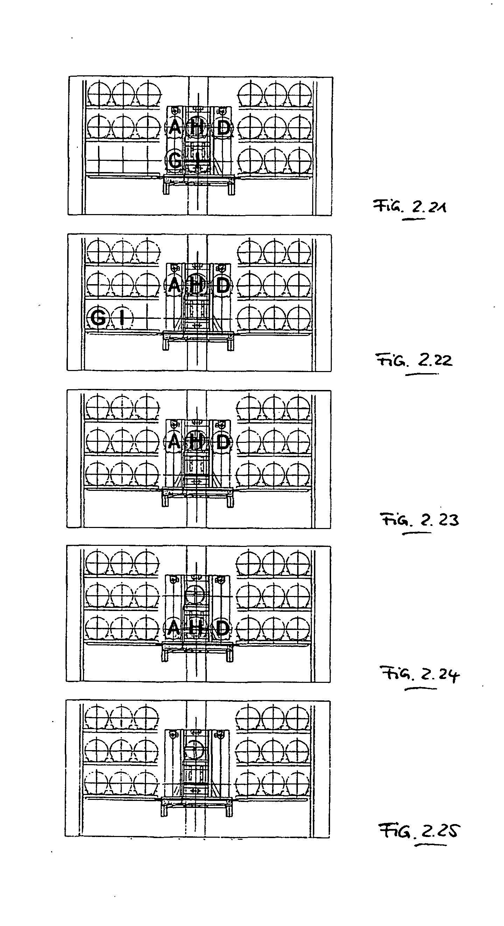

Im folgenden wird anhand der Fig. 2.1 bis 2.25 eine beispielhafte Regalfahrt zur Auslagerung verschiedener Objekte in den einzelnen Phasen erläutert.

Das Regallager 20 umfaßt eine Vielzahl von übereinander und nebeneinander angeordneten Regalfächern 22, zwischen denen ein Regalgang 21 gebildet ist. Das Regalbediengerät ist entlang dem Regalgang verfahrbar und trägt einen Mast 17, an dem die Hubbühne 10 höhenverfahrbar gehalten ist. Jedes Regalfach 22 besitzt drei hintereinander liegende Regallagerplätze und kann somit drei Objekte in dreifach tiefer Einlagerung aufnehmen. Bei dem dargestellten Ausführungsbeispiel sind die Objekte von Rollen 18 gebildet, die jeweils auf einer Auflage 19 sitzen, die ein Wegrollen der Rollen 18 verhindert.

Fig. 2.1 zeigt die Ausgangsstellung der Hubbühne 10, wobei davon ausgegangen wird, daß sich sowohl sämtliche Hubvorrichtungen 16.1,16.2. und 16.3 als auch sämtliche Horizontalförderer 14.1.1,14.1.2,14.2.1 und 14.2.2 in ihrer unteren Stellung befinden, in der ihre lastaufnehmenden Oberflächen unterhalb der Oberseite der Teleskopgabeln 13.1,13.2 und 13.3 liegt. Zunächst soll aus einem Regalfach, das die Rollen A,B und C enthält, die innere, dem Regalgang 21 abgewandte Rolle A entnommen werden. Zu diesem Zweck wird das Regalfach 22 in üblicher Weise angefahren und die Hubbühne 10 genau positioniert (Fig. 2.1). Anschließend werden die Teleskopgabeln 13.1,13.2 und 13.3 in das Regalfach 22 eingefahren und nehmen die drei Rollen A,B und C auf. Durch Einziehen der Teleskopgabeln 13.1,13.2 und 13.3 werden die drei Rollen A,B und C aus dem Regalfach 22 auf die Speicherplätze 15.1,15.2 und 15.3 der Hubbühne 10 übernommen, wobei sie weiterhin auf den Teleskopgabeln 13.1,13.2 und 13.3 der Beschickungsvorrichtung 13 aufliegen (Fig. 2.2). Die auszulagernde Rolle A, die auf dem Speicherplatz 15.3 liegt, wird daraufhin zwischengelagert, indem die dem Speicherplatz 15.3 zugeordnete Hubvorrichtung 16.3 angehoben wird, wobei deren Lastaufnahmen mit der Rolle A von unten in Anlage kommen und diese bei ihrer weiteren nach oben gerichteten Bewegung von der Beschickungsvorrichtung 13 abheben. Die Rolle A wird soweit angehoben, daß die anderen Rollen B und C bei ihrer Verlagerung unter der Rollen A hindurchgeführt werden können (Fig. 2.3).

Anschließend werden die Rollen B und C auf der Hubbühne querverschoben. Zu diesem Zweck werden die Fördereinrichtungen 14.1 und 14.2 angehoben, wodurch sie die Rollen B und C von den Teleskopgabeln 13.1,13.2 und 13.3 abheben. Durch Aktivierung der Horizontalförderer 14.1.1,14.1.2, 14.2.1 und 14.2.2 werden die beiden Rollen B und C um jeweils einen Speicherplatz seitlich verschoben, wie es in Fig. 2.4 dargestellt ist. Anschließend werden die beiden Fördereinrichtungen 14.1 und 14.2 wieder abgesenkt, wodurch die beiden Rollen B und C auf den Teleskopgabeln 13.1,13.2 und 13.3 der Beschickungsvorrichtung 13 abgelegt werden. Durch deren Aktivierung können dann die Rollen B und C in das Regalfach 22 eingefahren werden, wie es in Fig. 2.5 dargestellt ist.

Die Rolle A verbleibt auf der Hubbühne 10 auf dem rechten Speicherplatz 15.3 in angehobener Stellung (Fig. 2.6). Um eine weitere im Inneren eines Regalfachs liegende Rolle aufnehmen zu können, muß die Rolle A vorher auf der Hubbühne 10 umgelagert werden. Zu diesem Zweck werden zunächst die die Rolle A tragenden Lastaufnahmen der Hubvorrichtung 16.3 abgesenkt und gleichzeitig die Fördereinrichtungen 14.1 und 14.2 angehoben, so daß die Rolle A auf diesen abgelegt wird (Fig. 2.7). Durch Aktivierung der Horizontalförderer 14.1.2 und 14.2.2 kann die Rolle A von dem rechten Speicherplatz 15.3 auf den mittleren Speicherplatz 15.2 verschoben werden (Fig. 2.8). Anschließend werden die Lastaufnahmen der dem mittleren Speicherplatz 15.3 zugeordneten Hubvorrichtung 16.2 angehoben, so daß sie die Rolle A in eine abgehobene Stellung bringt, wie es in Fig. 2.9 dargestellt ist. Während oder nach dem Umlagerungsvorgang der Rolle A fährt die Hubbühne 10 zu einem weiteren Regalfach, in dem Rollen D,E und F eingelagert sind (Fig. 2.10), wobei die Rolle D ausgelagert werden soll. Der zuvor im Zusammenhang mit den Rollen A,B und C beschriebene Auslagerungsvorgang wird nunmehr erneut mit den Rollen D,E und F durchgeführt, wie es in den Fig. 2.11 bis 2.14 dargestellt ist. Dieser Auslagerungsvorgang umfaßt das Herausnehmen der drei Rollen D,E und F aus dem Regalfach mittels der Teleskopgabeln 13.1, 13.2 und 13.3 der Beschickungsvorrichtung 13 (Fig. 2.11) und das anschließende Anheben der Rolle D durch Hochfahren der Lastaufnahmen der Hubvorrichtung 16.3 des der Rolle D zugeordneten Speicherplatzes 15.3 (Fig. 2.12). Anschließend werden die beiden Rollen E und F durch Anheben, Aktivieren und Absenken der beiden Fördereinrichtungen 14.1 und 14.2 auf der Hebebühne 10 seitlich versetzt (Fig. 2.13) und dann mittels der Teleskopgabeln 13.1,13.2 und 13.3 wieder in das Regalfach eingelagert (Fig. 2.14).

Da im folgenden eine auf einem mittleren Regallagerplatz eines Regalfachs liegende Rolle ausgelagert werden soll, muß zunächst die auf den angehobenen Lastaufnahmen der mittleren Hubvorrichtung 16.2 liegende Rolle A umgelagert werden. Zu diesem Zweck werden die Lastaufnahmen der Hubvorrichtung 16.2 abgesenkt und gleichzeitig die beiden Fördereinrichtungen 14.1 und 14.2 um ein geringes Maß angehoben, so daß die Rolle A auf den Fördereinrichtungen 14.1 und 14.2 zum Liegen kommt (Fig. 2.15). Anschließend werden die beiden Horizontalförderer 14.1.1 und 14.2.1 so aktiviert, daß die Rolle A von dem mittleren Speicherplatz 15.2 auf den seitlich außenliegenden, gemäß den Figuren linken Speicherplatz 15.1 verschoben wird (Fig. 2.16). Dann wird die Rolle A durch Anheben der Lastaufnahmen der zugeordneten Hubvorrichtung 16.1 in die angehobene Stellung verfahren (Fig. 2.17).

Während oder nach der Umlagerung der Rolle A verfährt die Hubbühne 10 zu einem weiteren Regalfach, in dem die Rollen G,H und I eingelagert sind (Fig. 2.18). Um die auf dem mittleren Regallagerplatz des Regalfachs angeordnete Rolle H auszulagern, werden zunächst die drei Rollen G,H und I mittels der Beschickungsvorrichtung auf die Hubbühne 10 übernommen, so daß die auszulagernde Rolle H auf dem mittleren Speicherplatz 15.2 liegt (Fig. 2.19). Anschließend werden die Lastaufnahmen der dem mittleren Speicherplatz 2.2 zugeordneten Hubvorrichtung 16.2 angehoben, so daß sich sämtliche drei Hubvorrichtungen 16.1,16.2 und 16.3 in der angehobenen Stellung befinden und die Rollen A,H und D tragen (Fig. 2.20). Durch Anheben und Aktivieren der Horizontalförderer 14.1.2 und 14.2.2 der Fördereinrichtung 14.1 und 14.2 kann die auf dem rechten Speicherplatz 15.3 liegende Rolle I auf den mittleren Speicherplatz 15.2 umgelagert werden, während die Rolle G auf dem linken Speicherplatz 15.1 verbleibt (siehe Fig. 2.21). Anschließend werden die Fördereinrichtungen 14.1 und 14.2 abgesenkt und die Rolle G und I werden mittels der Teleskopgabeln 13.1,13.2 und 13.3 wieder in das Regalfach eingelagert (Fig. 2.22). In dieser Stellung sind die drei Speicherplätze 15.1, 15.2 und 15.3 der Hubbühne 10 frei, während die angehobenen Hubvorrichtungen 16.1, 16.2 und 16.3 die Rollen A,H und D tragen (Fig. 2.23). Die Lastaufnahmen der Hubvorrichtungen 16.1,16.2 und 16.3 werden daraufhin abgesenkt, wodurch die Rollen A,H und D auf den Teleskopgabeln 13.1,13.2 und 13.3 der Beschickungsvorrichtung 13 abgelegt werden (Fig. 2.24). Die Hebebühne 10 fährt in dieser Stellung zu einer Übergabestation am Ende des Regalganges, an der die drei auszulagernden Rollen A,H und D mittels der Beschickungsvorrichtung 13 oder mittels der Fördereinrichtungen 14.1 und 14.2 von der Hebebühne 10 abgegeben werden, so daß diese für einen weiteren Auslagerungsvorgang frei ist (Fig. 2.25). Die Einlagerung von Rollen kann in entsprechender umgekehrter Reihenfolge durchgeführt werden.

Wie sich aus der vorstehenden Beschreibung eines Auslagerungsvorganges ergibt, kann mit dem erfindungsgemäßen Regalbediengerät auf jeden Regallagerplatz eines Regalfachs beliebig zugegriffen werden, da die Rollen auf der Hebebühne 10 mittels der Fördereinrichtungen 14.1 und 14.2 zwischen den einzelnen Speicherplätzen 15.1, 15.2 und 15.3 umgesetzt werden können und somit auch zwischen den Lastaufnahmen der Hubvorrichtungen 16.1,16.2 und 16.3 der genannten Speicherplätze verschoben werden können.

## Patentansprüche

1. Regalbediengerät für ein Regallager, das eine Vielzahl von Regalfächern aufweist, die von einem Regalgang aus zugänglich sind und jeweils mehrere hintereinander liegende Regallagerplätze aufweisen,
mit einer Plattform (11), die eine Beschickungsvorrichtung (13) zum Einlagern von Objekten in Regallagerplätze bzw. zum Auslagern aus diesen und mehrere Speicherplätze (15.1,15.2,15.3) zur Aufnahme von jeweils einem ein- bzw. auszulagernden Objekt aufweist, wobei ein Umsetzförderer (14) vorgesehen ist, mittels dessen das Objekt zwischen verschiedenen Speicherplätzen (15.1,15.2,15.3) umsetzbar ist, **dadurch gekennzeichnet, daß** die Speicherplätze (15.1,15.2,15.3) quer zur Längsrichtung (LR) des Regalgangs nebeneinander angeordnet sind und daß jedem Speicherplatz (15.1, 15.2,15.3) eine Hubvorrichtung (16.1,16.2,16.3) zugeordnet ist, mittels der ein auf einem der Speicherplätze angeordnetes Objekt relativ zu den Objekten auf den anderen Speicherplätzen höhenverfahrbar (Pfeil V₃) ist.

2. Regalbediengerät nach Anspruch 1, **dadurch gekennzeichnet, daß** drei Speicherplätze (15.1,15.2,15.3) nebeneinander angeordnet sind.

3. Regalbediengerät nach Anspruch 1 oder 2, **dadurch gekennzeichnet, daß** die Hubvorrichtungen (16.1,16.2, 16.3) der Speicherplätze (15.1,15.2,15.3) jeweils zwischen einer im wesentlichen in oder unter der Ebene der Beschickungsvorrichtung (13) und des Umsetzförderers (14) liegenden unteren Position und einer angehobenen Position verfahrbar sind.

4. Regalbediengerät nach einem der Ansprüche 1 bis 3, **dadurch gekennzeichnet, daß** die Umsetzförderer (14) zwei in Längsrichtung (LR) des Regalgangs auf Abstand angeordnete horizontale Fördereinrichtungen (14.1,14.2) umfaßt.

5. Regalbediengerät nach Anspruch 4, **dadurch gekennzeichnet, daß** jede Fördereinrichtung (14.1,14.2) zwei quer zur Längsrichtung (LR) des Regalgangs verlaufende Horizontalförderer (14.1.1,14.1.2, 14.2.1,14.2.2) aufweist, die sich jeweils nur über einen Teil der Breite der nebeneinander liegende Speicherplätze (15.1,15.2, 15.3) erstrecken und sich im Bereich des mittleren Speicherplatzes (15.2) überlappen.

6. Regalbediengerät nach Anspruch 4 oder 5, **dadurch gekennzeichnet, daß** die Fördereinrichtungen (14.1,14.2) höhenverstellbar (Pfeil V₂) sind.

7. Regalbediengerät nach Anspruch 5 oder 6, **dadurch gekennzeichnet, daß** die Horizontalförderer (14.1.1, 14.1.2, 14.2.1,14.2.2) jeder Fördereinrichtung (14.1, 14.2) unabhängig voneinander antreibbar sind.

## Claims

1. Shelf servicing means for a shelf store, which has a plurality of shelf compartments accessible from a passageway and in each case having several successively positioned shelf store places, having a platform (11), which is provided with a loading device (13) for placing objects in and removing them from shelf store places and a plurality of storage locations (15.1, 15.2, 15.3) for receiving in each case one object to be placed in or removed from the locations, a transfer conveyor (14) being provided and by means thereof the object can be transferred between different storage locations (15.1, 15.2, 15.3), **characterized in that** the storage locations (15.1, 15.2, 15.3) are juxtaposed transversely to the longitudinal direction (LR) of the passageway and that with each storage location (15.1, 15.2, 15.3) is associated a lifting appliance (16.1, 16.2, 16.3), by means of which an object to be placed on one of the storage locations is vertically movable relative to the objects on the other storage locations (arrow V₃).

2. Shelf servicing means according to claim 1, **characterized in that** three storage locations (15.1, 15.2, 15.3) are juxtaposed.

3. Shelf servicing means according to claims 1 or 2, **characterized in that** the lifting appliances (16.1, 16.2, 16.3) of the storage locations (15.1, 15.2, 15.3) are in each case movable between a lower position located substantially in or below the plane of the loading device (13) and the transfer conveyor (14) and a raised position.

4. Shelf servicing means according to one of the claims 1 to 3,
**characterized in that** the transfer conveyor (14) has two spaced, horizontal conveying means (14.1, 14.2) positioned in the longitudinal direction (LR) of the passageway.

5. Shelf servicing means according to claim 4, **characterized in that** each conveying means (14.1, 14.2) has two horizontal conveyors (14.1.1, 14.1.2, 14.2.1, 14.2.2) running transversely to the longitudinal direction (LR) of the passageway and which in each case only extend over part of the width of the juxtaposed storage locations (15.1, 15.2, 15.3) and overlap in the vicinity of the central storage location (15.2).

6. Shelf servicing means according to claim 4 or 5, **characterized in that** the conveying means (14.1, 14.2) are vertically adjustable (arrow V₂).

7. Shelf servicing means according to claim 5 or 6, **characterized in that** the horizontal conveyors (14.1.1, 14.1.2, 14.2.1, 14.2.2) of each conveying means (14.1, 14.2) can be driven independently of one another.

## Revendications

1. Transstockeur pour un entrepôt à rayonnages présentant une multitude de compartiments de rayonnages accessibles par un couloir et présentant à chaque fois plusieurs emplacements d'entreposage sur rayonnage, transstockeur comprenant une plate-forme (11) qui présente un dispositif de chargement (13) pour l'entreposage d'objets à des emplacements d'entreposage sur rayonnage ou leur enlèvement de ces emplacements, et plusieurs emplacements de stockage (15.1, 15.2, 15.3) pour la réception à chaque fois d'un objet à entreposer ou à enlever, dans lequel on prévoit un' convoyeur de déplacement (14) au moyen duquel l'objet peut être déplacé entre différents emplacements de stockage (15.1, 15.2, 15.3), **caractérisé en ce que** les emplacements d'accumulation (15.1, 15.2, 15.3) sont disposés les uns à côté des autres transversalement par rapport au sens longitudinal (LR) du couloir, et **en ce qu'**on associe à chaque emplacement de stockage (15.1, 15.2, 15.3) un dispositif de levage (16.1, 16.2, 16.3) au moyen duquel on peut déplacer en hauteur (flèche V₃) un objet disposé sur un des emplacements de stockage par rapport aux objets se trouvant sur les autres emplacements de stockage.

2. Transstockeur selon la revendication 1, **caractérisé en ce que** trois emplacements de stockage (15.1, 15.2, 15.3) sont disposés l'un à côté de l'autre.

3. Transstockeur selon la revendication 1 ou 2, **caractérisé en ce que** les dispositifs de levage (16.1, 16.2, 16.3) des emplacements de stockage (15.1, 15.2, 15.3) sont disposés à chaque fois entre une position basse située sensiblement dans ou en-dessous du plan du dispositif de chargement (13) et du convoyeur de déplacement (14) et une position haute.

4. Transstockeur selon l'une quelconque des revendications 1 à 3, **caractérisé en ce que** le convoyeur de déplacement (14) comprend deux dispositifs de convoyage (14.1, 14.2) horizontaux disposés à distance l'un de l'autre dans le sens longitudinal (LR) du couloir.

5. Transstockeur selon la revendication 4, **caractérisé en ce que** chaque dispositif de convoyage (14.1, 14.2) présente deux convoyeurs horizontaux (14.1.1, 14.1.2, 14.2.1, 14.2.2) s'étendant transversalement par rapport au sens longitudinal (LR) du couloir, qui ne s'étendent que sur une partie de la largeur des emplacements de stockage situés côte à côte (15.1, 15.2, 15.3) et se chevauchent dans la zone de l'emplacement de stockage médian (15.2).

6. Transstockeur selon la revendication 4 ou 5, **caractérisé en ce que** les dispositifs de convoyage (14.1, 14.2) sont réglables en hauteur (flèche V₂).

7. Transstockeur selon la revendication 5 ou 6, **caractérisé en ce que** les convoyeurs horizontaux (14.1.1, 14.1.2, 14.2.1, 14.2.2) de chaque dispositif de convoyage (14.1, 14.2) peuvent être actionnés indépendamment les uns des autres.
